# EUROPÄISCHE PATENTSCHRIFT

(11) **EP 4 556 744 B1**
(45) Veröffentlichungstag und Bekanntmachung des Hinweises auf die Patenterteilung: **04.02.2026**
(21) Anmeldenummer: 24212230.7
(22) Anmeldetag: 11.11.2024
(51) Int. Cl.: F16F 1/38, F16F 1/373, F16F 1/387

(54) **ELASTISCHES LAGERELEMENT**
ELASTIC MOUNTING ELEMENT
ÉLÉMENT DE SUPPORT ÉLASTIQUE

(30) Priorität: 14.11.2023 DE 102023131725
(43) Veröffentlichungstag der Anmeldung: 21.05.2025
(73) Patentinhaber: Vibracoustic SE, 69469 Weinheim (DE)
(72) Erfinder: Hettler, Werner, 68309 Mannheim (DE)
(74) Vertreter: Patentanwälte Olbricht Buchhold Keulertz

(56) Entgegenhaltungen:
- EP-B1- 1 811 195
- DE-A1- 102007 023 886
- DE-A1- 102017 223 594
- DE-C5- 10 006 178

## Beschreibung

Die Erfindung betrifft ein elastisches Lagerelement zum Abstützen von Lasten in einem Fahrzeug und ein Montageverfahren.

Der Fahrzeugbau unterliegt einem stetigen dynamischen Wechsel von Anforderungen, die mit Kosten und physikalischen Grenzen in Einklang gebracht werden müssen. Neue Antriebe oder Bauteile stellen regelmäßig neue Anforderungen an Bauraum und Dämpfungseigenschaften von Lagern.

Elastomerlager in Buchsenform finden im Fahrzeugbau breite Anwendung. Es ist Stand der Technik, dass sich durch Aussparungen in der Gummikontur die Federraten in alle drei Raumrichtungen in Grenzen beeinflussen lassen.

DE 198 59 067 A1 beschreibt ein solches Gummilager mit einseitiger Bindung.

Ein weiteres, vorgespanntes Gummilager ist aus der DE 10 2017 223594 A1 bekannt.

Hauptmerkmale der Erfindung sind in Anspruch 1 sowie im Verfahrensanspruch 11 angegeben. Ausgestaltungen sind Gegenstand der Ansprüche 2 bis 10.

Das erfindungsgemäße elastische Lagerelement zum Abstützen von Lasten in einem Fahrzeug mit einer Längsachse und einem Federelement, wobei das Federelement einen Lagerkern und ein auf den Lagerkern aufvulkanisiertes Elastomer aufweist, wobei das Elastomer wenigstens einen Stollen ausbildet, der vom Lagerkern abragt, eine Kassette, die gegenüber dem Federelement ein Untermaß aufweist und das Federelement radial vorspannt, wobei die Kassette eine dem Federelement zugewandte Seite und eine dem Federelement abgewandte Seite aufweist, und eine Aufnahme, aufweisend eine Einschuböffnung zum Einschieben der Kassette, wobei die Aufnahme eine erste axiale Federwegsbegrenzung zu einer ersten Stirnseite und eine zweite axiale Federwegsbegrenzung zu einer zweiten Stirnseite aufweist und die Kassette in die Aufnahme aufgenommen ist.

Hohe Federraten mit einem ausgeprägten linearen Verlauf der Steifigkeit sind insbesondere bei einseitig gebundenen Federelementen nur mit verhältnismäßig dicken Elastomerfedern, die auch Stollen oder Federelement genannt werden können, zu erreichen, die starke Vorspannungen in der jeweiligen Richtung aufweisen müssen. Hohe Federraten in allen drei Raumrichtungen erfordern also eine hohe Vorspannung in eben diesen drei Raumrichtungen. Filigrane Stollen begünstigen eine anfängliche Linearität der Federraten.

Der um den Lagerkern angeordnete wenigstens eine Stollen, der vom Lagerkern abragt, ermöglicht Federraten in allen radialen Richtungen zu dimensionieren und somit beispielsweise in einer Querrichtung zur Fahrtrichtung eine andere Federrate als in Fahrtrichtung bereitzustellen. Die Kassette spannt das Federelement vor, indem sie gegenüber dem Federelement in wenigstens einer radialen Richtung ein Untermaß aufweist. Somit wird mit dem Einsetzen des Federelements in die Kassette das Elastomer mit seinem wenigstens einen vom Lagerkern abragenden Stollen komprimiert und die radialen Federraten eingestellt. Hierbei spricht man auch vom radialen Kalibrieren des Federelements. Die Federrate hängt dabei von der Geometrie des Elastomers und dem Untermaß der Kassette ab.

Radiales Vorspannen erhöht die Steifigkeit eines Federelements und hält es gleichzeitig in Position. Das Federelement muss nicht mit der Kassette mittels Vulkanisation haftend verbunden werden. Es wird, vorzugsweise ausschließlich, durch Kraftschluss und/oder Formschluss in der Kassette gehalten.

Kassettenbauweise spart Bauraum und schafft mit einer korrespondierenden Aufnahme eine einfache und sichere Verbindung. Damit wird das Risiko von Beschädigungen bei der Montage verringert, ohne die Vorspannung zu reduzieren. Weiterhin wird das Risiko einer falschen Montage durch eine definierte Kassetten-Aufnahme-Verbindung verringert.

Die Kassette ist beispielsweise aus Kunststoff gefertigt.

Die Aufnahme ist beispielsweise aus einem Metall, insbesondere aus Aluminium-Druckguss gefertigt.

Eine Aufnahme erlaubt eine axiale Festlegung oder Vorspannung unabhängig von einer radialen Vorspannung, sodass die Montage des Federelements in die Kassette lediglich eine radiale Vorspannung umfasst und das Einschieben der Kassette in die Aufnahme die axiale Festlegung oder Vorspannung umfasst. So müssen nicht gleichzeitig in allen drei Raumrichtungen Kräfte aufgebracht werden und die Montage wird erleichtert.

Die Kassette kann beispielsweise durch Formschluss und / oder Reibschluss in der Aufnahme fixiert werden.

Eine axiale Federwegbegrenzung durch ein ringförmiges Abstützelement an den beiden Stirnseiten an den in axialer Richtung Enden der Aufnahme begrenzt den Federweg dadurch, dass das Federelement bei höchstmöglicher Verformung der Stollen nicht über die Abstützelemente hinaus axial verschoben werden kann.

Das Lagerelement kann eine axiale Durchgangsbohrung zum Verschrauben einer Last aufweisen. Das Lagerelement kann andere Befestigungsmittel aufweisen, um mit einer Last und / oder einem Bauteil zum Abstützen einer Last verbunden zu werden.

In einer technisch vorteilhaften Ausgestaltung spannen die erste axiale Federwegsbegrenzung und die zweite axiale Federwegsbegrenzung in einem Montagezustand das Elastomer zumindest bereichsweise vor.

Ein Montagezustand beschreibt den Zustand, in dem das elastische Lagerelement selbst montiert, also alle Schritte des erfindungsgemäßen Herstellungsverfahrens erfolgt sind.

Die Vorspannung durch die obere und die untere axiale Federwegsbegrenzung ermöglicht in Kombination mit dem wenigstens einen abragenden Stollen eine Dimensionierung der axialen Federrate. Eine axiale Vorspannung kann nur entstehen, wenn entweder der wenigstens eine Stollen axial gegenüber der Kassette ein Übermaß aufweist oder wenn er durch die radiale Vorspannung axial über die Kassette hinausgedrückt wird.

In einer weiteren technisch vorteilhaften Ausgestaltung ist der Stollen durch wenigstens eine Aussparung in wenigstens einer Raumrichtung unterbrochen.

Aussparungen ermöglichen weitere Dimensionierung der Federraten in jeder Raumachse, ohne dabei die Einrichtung des gewünschten Progressionsverlaufs und der definitiven Wegbegrenzung zu vernachlässigen. Aussparungen können dabei um den ganzen Umfang und/oder abschnittsweise in Umfangsrichtung und/oder in axialer Richtung als Ausschnitte über die gesamte radiale Dicke und/oder als Ausnehmung über einen Teil der radialen Dicke vorgesehen sein. Somit können dieselben Kassetten und Lagerkerne mit unterschiedlichen Stollengeometrien verwendet werden, um unterschiedliche Federraten anwendungsabhängig bereitzustellen. Dies führt zu größeren Stückzahlen gleichbleibender Teile und verringert damit die Produktionskosten.

Bei einer weiteren technisch vorteilhaften Ausgestaltung weist das Lagerelement eine Federrate in axialer Richtung und wenigstens zwei Federraten in radialer Richtung auf und die Federraten in axialer Richtung betragen zwischen 20 % und 600 %, bevorzugt zwischen 100 % und 200 %, besonders bevorzugt 140 % der niedrigeren dieser wenigstens zwei Federraten in radialer Richtung.

Durch eine axiale Federrate zwischen 20 % und 600 %, bevorzugt zwischen 100 % und 200 %, besonders bevorzugt 140 % der niedrigeren wenigstens zwei radialen Federrate wird den modernen Anforderungen der Elektromobilität Rechnung getragen. Insbesondere hohe Gewichte von Energiespeichern stellen herkömmliche Lagerelemente vor Herausforderungen. Durch eine axiale Federrate von bis zu 600 % der wenigstens zwei radialen Federraten können weitere Anforderungen erfüllt werden. Eine Konfiguration mit einer axialen Federrate von 20 % der niedrigeren der wenigstens zwei radialen Federraten trägt anderen Anforderungen komplexer Fahrzeugsysteme Rechnung. Dieses breite Feld von Federratenverhältnissen mit größtenteils übereinstimmenden Bauteilen spart Kosten und erhöht die Verfügbarkeit von Bauteilen.

In einer weiteren technisch vorteilhaften Ausgestaltung wird der wenigstens eine Stollen des Federelements durch die Kassette um 10 % bis 50 % seiner radialen Ausdehnung, bevorzugt 10 % bis 20 % seiner radialen Ausdehnung komprimiert.

Die besonders hohe Kalibrierrate, welche eine Vorspannung des wenigstens einen Stollens bewirkt, bringt das Federelement in eine Arbeitsposition, indem es einen negativen Federweg aufgezwungen bekommt. Dadurch kann das Federelement in alle Richtungen durch eine Last komprimiert werden, ohne dass die gegenüberliegende Seite des Federelements den Kontakt zur Kassette verliert und erreicht abhängig von der Vorspannung definierte Federraten in allen radialen Richtungen. Zudem bleibt hierdurch in allen Belastungssituationen eine Druckvorspannung im Elastomer bestehen, was eine hohe Lebensdauer des Federelementes begünstigt.

In einer weiteren technisch vorteilhaften Ausgestaltung ist ein mittiger Stollen vorgesehen, der radial vom Lagerkern abragt und auch als Radialanschlag bezeichnet werden kann.

Dieser mittige Stollen ist bevorzugt und im Gegensatz zu den übrigen Stollen nicht radial und / oder axial vorgespannt und bildet vorzugsweise einen Luftspalt zwischen mittigem Stollen und der Kassette. Dieser nicht vorgespannte Stollen kann als radialer Endanschlag dienen. Hierdurch kann der Steifigkeitsverlauf des elastischen Lagerelementes in radialer Richtung zunächst einen linearen Verlauf aufweisen, der nach Überwinden des Luftspaltes beim Kontakt des mittigen Stollens mit der Kassette anschließend progressiv, dass heißt mit einem deutlichen Steifigkeitssprung verläuft. Außerdem limitiert dieser mittige Stollen die Druckbelastung der übrigen Stollen durch radiale Auslenkungen und erhöht somit deren Lebensdauer.

In einer weiteren technisch vorteilhaften Ausgestaltung ist an Kontaktpunkten zwischen dem Federelement und der Kassette und / oder zwischen dem Federelement und der Aufnahme wenigstens ein Einlegeelement angeordnet.

Mit wenigstens einem Einlegeelement kann die Vorspannung weiter erhöht und damit auch die Steifigkeit des elastischen Lagerelements weiter erhöht werden. Einlegeelemente erhöhen das Untermaß der Kassette und / oder der Aufnahme, sodass das Federelement in radialer und / oder axialer Richtung noch stärker komprimiert wird. Somit können gleiche Bauteile für unterschiedlich steife Lagerelemente mit einfachen Mitteln angepasst werden, was Produktionskosten senkt. Einlegeelemente können umlaufend oder abschnittsweise zwischen dem Elastomer des Federelements und der Kassette und / oder zwischen dem Elastomer und der Aufnahme angeordnet sein und somit die Arretierung ändern und / oder die Vorspannung erhöhen.

In einer weiteren technisch vorteilhaften Ausgestaltung weist das Einlegeelement wenigstens ein Halteelement auf und / oder korrespondiert mit wenigstens einem Halteelement des elastischen Lagerelements.

Um ein Verschieben des wenigstens einen Einlegeelements bei maximaler Entlastung, also einer maximalen Belastung der gegenüberliegenden Seite des Federelements zu vermeiden, kann das wenigstens eine Einlegeelement über wenigstens ein Halteelement verfügen, wie beispielsweise, aber nicht darauf beschränkt, Nuten, Nasen, Rippen. Sollte eine Belastung also dazu führen, dass das Federelement einseitig den Kontakt zu dem wenigstens einen Einlegeelement verliert, wird das wenigstens eine Einlegeelement weiterhin durch sein Halteelement an seiner Position gehalten.

Weiter kann auch das elastische Lagerelement wenigstens ein Halteelement aufweisen, das das wenigstens eine Einlegeelement bei einer Belastung der gegenüberliegenden Seite des Federelements in Position hält.

Es können auch sowohl das wenigstens eine Einlegeelement als auch das elastische Lagerelement wenigstens ein Halteelement aufweisen, die miteinander oder nebeneinander das wenigstens eine Einlegeelement in Position halten.

In einer weiteren technisch vorteilhaften Ausgestaltung ist das wenigstens eine Einlegelement an der Kassette zugewandten Kante und / oder der ersten axialen Federwegsbegrenzung und / oder der zweiten axialen Federwegsbegrenzung zugewandten Außenfläche des wenigstens einen Stollens angeordnet.

Durch die Anordnung zwischen Stollen und Kassette und / oder zwischen Stollen und oberer und unterer axialer Wegbegrenzung kann das wenigstens eine Einlegeelement leichter in Position gehalten werden, womit mögliche Halteelemente einfacher dimensioniert oder ganz eingespart werden können.

In einer weiteren technisch vorteilhaften Ausgestaltung ist das Einlegeelement in den wenigstens einen Stollen eingebettet.

Eingebettet in den wenigstens einen Stollen, ist die Montage weiter vereinfacht, da kein zusätzliches Teil zwischen Kassette und Federelement bzw. Aufnahme und Federelement angeordnet werden muss.

In einer weiteren technisch vorteilhaften Ausgestaltung ist das Einlegeelement und / oder das in den Stollen eingebettete Einlegeelement stoffschlüssig beispielsweise mittels Vulkanisation mit dem Elastomer verbunden.

Ein stoffschlüssig mit dem Elastomer verbundenes Einlegelement kann die Steifigkeit weiter erhöhen. Außerdem ist die Montage weiter vereinfacht, da sich kein Elastomer bei der Montage zwischen Kassette und Aufnahme verklemmen kann.

In einer weiteren vorteilhaften Ausgestaltung ist der Lagerkern derart gestaltet, dass er auch ohne aufvulkanisiertes Elastomer in axialer Richtung gegenüber der ersten axialen Federwegsbegrenzung und / oder der zweiten axialen Federwegsbegrenzung ein radiales Übermaß aufweist und zumindest bereichsweise einen Hinterschnitt in mindestens einer axialen Richtung aufweist.

Ein Lagerkern, der in axialer Richtung schon ohne aufvulkanisiertes Elastomer nicht durch die axiale Federwegsbegrenzungen der Aufnahme passt, erleichtert eine axiale Wegbegrenzung, da das Federelement durch den stabilen Lagerkern sich weniger stark verformen kann. Besonders vorteilhaft passt der Lagerkern auch bei einem Defekt des Elastomers oder der Verbindung zum Elastomer nicht durch die Abstützelemente der Aufnahme, sodass eine Fail-Safe-Konstruktion bereitgestellt wird.

Ein Verfahren zur Montage eines erfindungsgemäßen elastischen Lagerelements umfasst die folgenden Schritte:
a. Radiales Verspannen eines Federelements durch Einbringen des Federelements in eine Kassette zum Herstellen einer Vormontagebaugruppe,
b. Einschieben der Kassette in eine Aufnahme und damit axiales Verspannen des Federelements zum Herstellen eines elastischen Lagerelements.

Das Verfahren zur Montage eines erfindungsgemäßen elastischen Lagerelements trennt die Vorspannung des Federelements in radialer Richtung und Vorspannung des Federelements in axialer Richtung. Damit kann in einem ersten Schritt die radiale Vorspannung des Federelements durch axiales Einpressen in die Kassette erfolgen. In einem zweiten Schritt kann das radial vorgespannte Federelement mit der Kassette in die Aufnahme eingebracht werden, um so auch eine axiale Vorspannung zu erreichen. Die Trennung dieser beiden Schritte verringert den Montageaufwand, verringert die zeitgleich benötigten Kräfte beim Vorspannen des Federelements und verringert somit auch das Risiko von Beschädigungen oder Montagefehlern.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Schnittansicht durch ein elastisches Lagerelement
- Fig. 2: eine schematische Schnittansicht durch ein elastisches Lagerelement
- Fig. 3: eine perspektivische Ansicht auf ein schematisches elastisches Lagerelement
- Fig. 4: eine perspektivische Ansicht auf eine schematische Vormontagebaugruppe
- Fig. 5: eine perspektivische Ansicht eines Federelements
- Fig. 6: eine perspektivische Ansicht einer Kassette
- Fig. 7: eine schematische Schnittansicht durch ein elastisches Lagerelement mit Einlegeelementen
- Fig. 8: eine schematische Schnittansicht durch ein elastisches Lagerelement mit Einlegeelementen

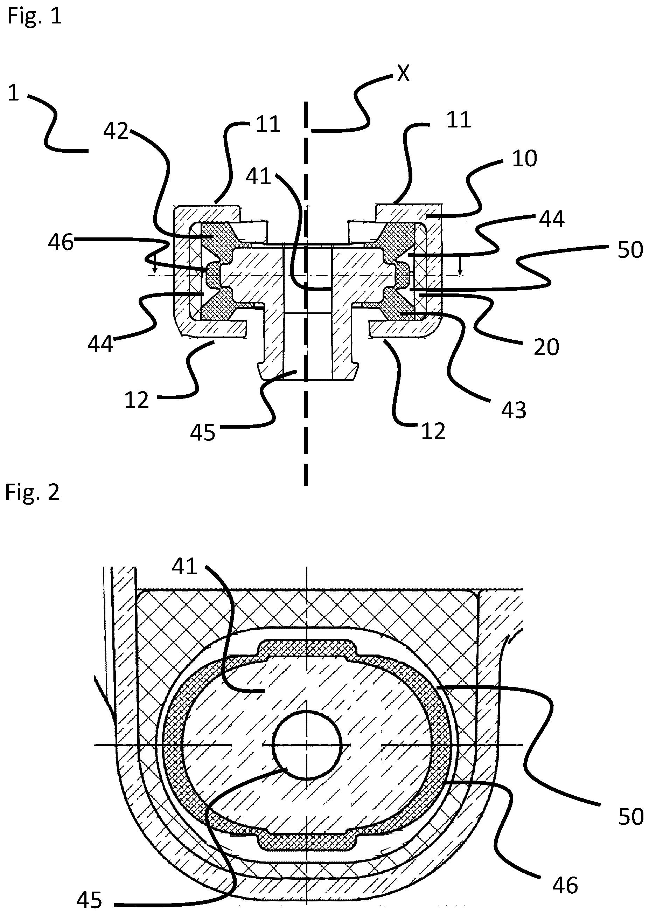

Fig. 1 zeigt eine schematische Schnittansicht durch ein elastisches Lagerelement 1 mit einer Längsachse X und einer Aufnahme 10, die eine Kassette 20 aufnimmt und ein Elastomer 42 mit einem axial vorgespannten Stollen 43 und einem mittigen Stollen 46. Die Aufnahme 10 bildet eine erste axiale Federwegsbegrenzung 11 und eine zweite axiale Federwegsbegrenzung 12 aus. Die Stollen 43 sind durch Aussparungen 44 unterbrochen. Die Kassette 20 spannt die Stollen 43 radial vor. Das Elastomer 42 ist an einem Lagerkern 41 aufvulkanisiert. Der Lagerkern 41 weist eine Durchgangsbohrung 45 auf. Zwischen mittigem Stollen 46 und Kassette 20 ist ein Luftspalt 50 ausgebildet.

Fig. 2 zeigt eine schematische Schnittansicht durch ein elastisches Lagerelement 1 mit einer Schnittfläche durch die mittigen Stoll 46 der Fig. 1. Der umlaufende mittige Stollen 46 ist am Lagerkern 41 aufvulkanisiert und weist eine Durchgangsbohrung 45 auf. Zwischen mittigem Stollen 46 und Kassette 20 ist ein Luftspalt 50 ausgebildet.

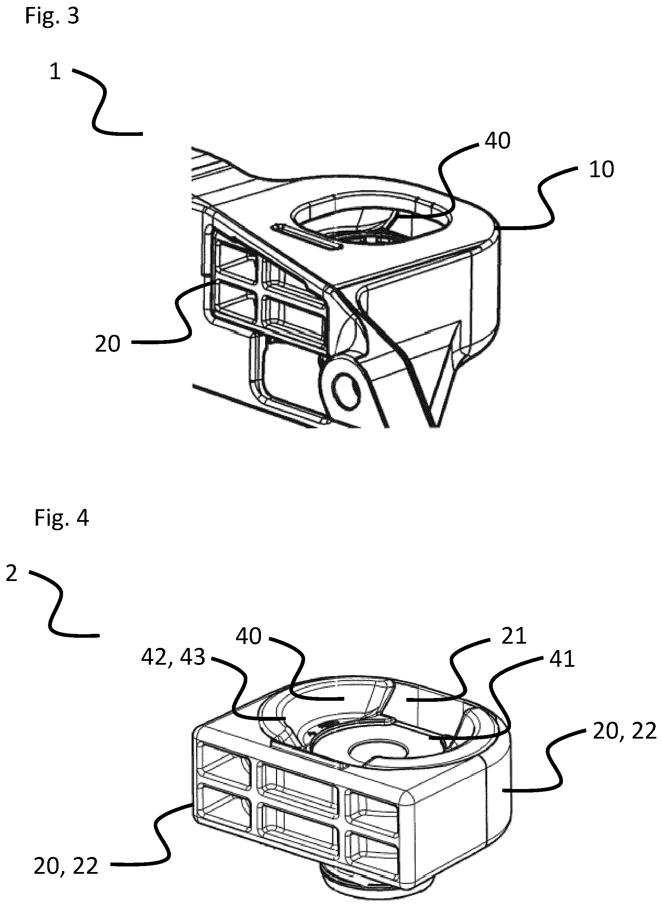

Fig. 3 zeigt eine perspektivische Ansicht auf ein schematisches elastisches Lagerelement 1 mit einer Aufnahme 10, die eine Kassette 20 mit einem Federelement 40 aufnimmt.

Fig. 4 zeigt eine perspektivische Ansicht auf eine schematische Vormontagebaugruppe 2, mit einer Kassette 20 und einem Federelement 40. Die Kassette 20 weist eine dem Federelement 40 zugewandte Seite 21 und eine dem Federelement 40 abgewandte Seite 22 auf. Das Federelement 40 weist einen Lagerkern 41 mit aufvulkanisiertem Elastomer 42 auf, wobei das Elastomer 42 Stollen 43 ausbildet, die vom Lagerkern 41 abragen. Die Kassette 20 spannt das Federelement 40 radial vor.

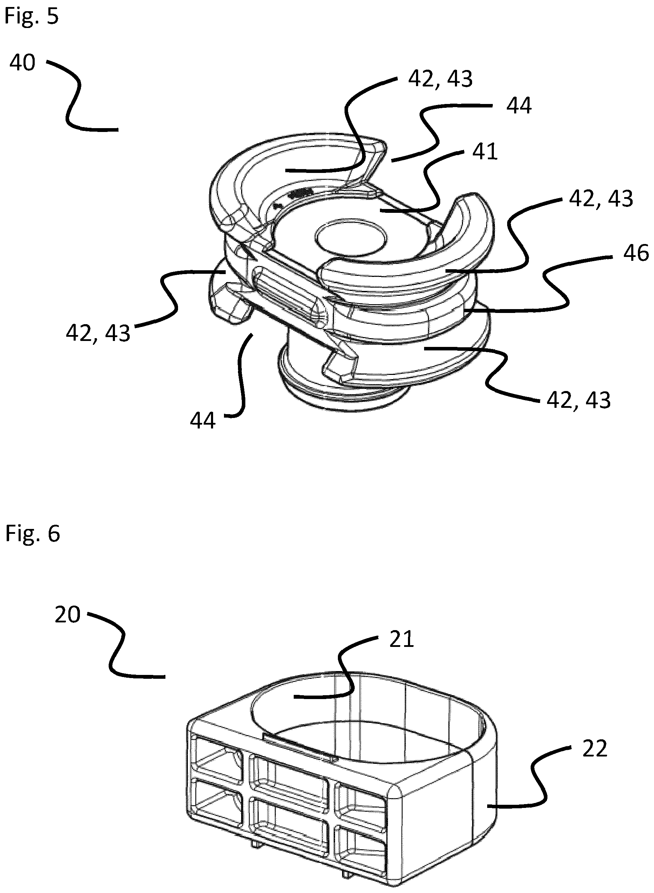

Fig. 5 zeigt eine perspektivische Ansicht auf ein schematisches Federelement 40 mit einem Elastomer 42, das Stollen 43 ausbildet, davon ein umlaufender mittiger Stollen 46, die von Aussparungen 44 unterbrochen sind. Das Elastomer 42 ist am Lagerkern 41 aufvulkanisiert.

Fig. 6 zeigt eine perspektivische Ansicht auf eine schematische Kassette 20 mit einer dem Federelement zugewandten Seite 21 und einer dem Federelement abgewandten Seite 22.

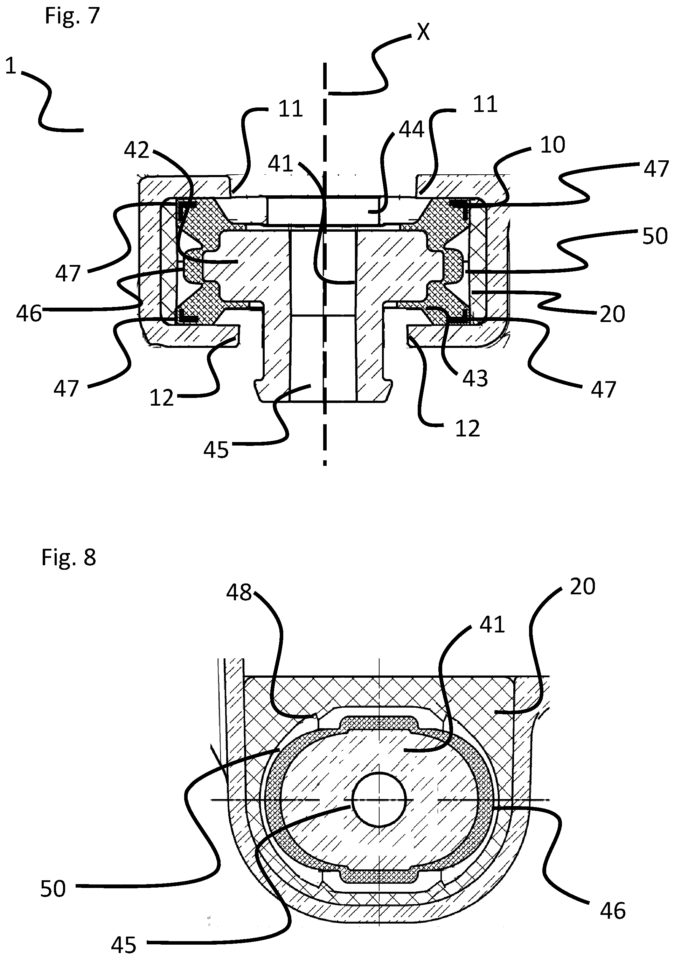

Fig. 7 zeigt eine schematische Schnittansicht durch ein elastisches Lagerelement 1 mit einer Längsachse X und einer Aufnahme 10, die eine Kassette 20 aufnimmt und ein Elastomer 42 mit einem Stollen 43 und einem mittigen Stollen 46 axial vorspannt. Die Aufnahme 10 bildet eine erste axiale Federwegsbegrenzung 11 und eine zweite axiale Federwegsbegrenzung 12 aus. Die Stollen 43 sind durch Aussparungen 44 unterbrochen. Die Kassette 20 spannt die Stollen 43 radial vor. Das Elastomer 42 ist an einem Lagerkern 41 aufvulkanisiert. In das Elastomer 42 sind Einlegeelemente 47 zwischen Aufnahme 10, Kassette 20 und dem Federelement 40 in den Stollen 43 eingebettet. Einlegeelement 47 und Elastomer 42 sind stoffschlüssig mittels Vulkanisation verbunden. Der Lagerkern 41 weist eine Durchgangsbohrung 45 auf. Zwischen mittigem Stollen 46 und Kassette 20 ist ein Luftspalt 50 ausgebildet.

Fig. 8 zeigt eine schematische Schnittansicht durch ein elastisches Lagerelement 1 mit einer Schnittfläche durch die mittigen Stollen 46 der Fig. 7. Der umlaufende mittige Stollen 46 ist am Lagerkern 41 anvulkanisiert und weist eine Durchgangsbohrung 45 auf. An der Kassette 20 sind Halteelemente 48 angeordnet. Zwischen mittigem Stollen 46 und Kassette 20 ist ein Luftspalt 50 ausgebildet.

Die Erfindung ist nicht auf eine der vorbeschriebenen Ausführungsformen beschränkt, sondern wird durch die Ansprüche definiert.

### Bezugszeichenliste

- 1: Elastisches Lagerelement
- 2: Vormontagebaugruppe
- 10: Aufnahme
- 11: erste axiale Federwegbegrenzung
- 12: zweite axiale Federwegbegrenzung
- 20: Kassette
- 21: Federelement zugewandte Seite
- 22: Federelement abgewandte Seite
- 40: Federelement
- 41: Lagerkern
- 42: Elastomer
- 43: Stollen
- 44: Aussparung
- 45: Durchgangsbohrung
- 46: mittiger Stollen
- 47: Einlegeelement
- 48: Halteelement
- 50: Luftspalt

- X: Längsachse

## Patentansprüche

1. Elastisches Lagerelement (1) zum Abstützen von Lasten in einem Fahrzeug mit einem Federelement (40), aufweisend:
- einen Lagerkern (41),
- ein auf den Lagerkern (41) aufvulkanisiertes Elastomer (42), wobei das Elastomer (42) wenigstens einen Stollen (43) ausbildet, der vom Lagerkern (41) abragt,
eine Kassette (20), die gegenüber dem Federelement (40) ein Untermaß aufweist und das Federelement (40) radial vorspannt, aufweisend:
- eine dem Federelement zugewandten Seite (21),
- eine dem Federelement abgewandten Seite (22),
und eine Aufnahme (10), aufweisend eine Einschuböffnung zum Einschieben der Kassette (20), wobei die Aufnahme (10) eine erste axiale Federwegsbegrenzung (11) zu einer ersten Stirnseite und eine zweite axiale Federwegsbegrenzung (12) zu einer zweiten Stirnseite aufweist und die Kassette (20) in die Aufnahme (10) aufgenommen ist; wobei das Lagerelement eine Längsachse (X) aufweist.

2. Elastisches Lagerelement (1) nach Anspruch 1, **dadurch gekennzeichnet, dass** die erste axiale Federwegsbegrenzung (11) und die zweite axiale Federwegsbegrenzung (12) das Elastomer zumindest bereichsweise im Montagezustand axial vorspannt.

3. Elastisches Lagerelement (1) nach einem der vorgehenden Ansprüche, **dadurch gekennzeichnet, dass** der wenigstens eine Stollen (43) durch wenigstens eine Aussparung (44) in wenigstens einer Raumrichtung unterbrochen ist.

4. Elastisches Lagerelement (1) nach einem der vorgehenden Ansprüche, **dadurch gekennzeichnet, dass** das Lagerelement (1) eine Federrate in axialer Richtung und wenigstens zwei Federraten in radialer Richtung aufweist und die Federrate in axialer Richtung zwischen 20 % und 600 %, bevorzugt zwischen 100 % und 200 % der niedrigeren dieser wenigstens zwei Federraten in radialer Richtung beträgt.

5. Elastisches Lagerelement (1) nach einem der vorgehenden Ansprüche, **dadurch gekennzeichnet, dass** der wenigstens eine Stollen (43) des Federelements (40) durch die Kassette (20) um 10 % bis 50 % seiner radialen Ausdehnung, bevorzugt 10 % bis 20 % komprimiert wird.

6. Elastisches Lagerelement (1) nach einem der vorgehenden Ansprüche, **dadurch gekennzeichnet, dass** an Kontaktpunkten zwischen dem Federelement (40) und der Kassette (20) und/oder zwischen dem Federelement (40) und der Aufnahme 10 wenigstens ein Einlegelement (47) angeordnet ist.

7. Elastisches Lagerelement (1) nach Anspruch 6, **dadurch gekennzeichnet, dass** das wenigstens eine Einlegeelement (47) wenigstens ein Halteelement (48) aufweist und/oder mit wenigstens einem Halteelement (48) des elastischen Lagerelements korrespondiert.

8. Elastisches Lagerelement (1) nach einem der Ansprüche 6 oder 7, **dadurch gekennzeichnet, dass** das wenigstens eine Einlegeelement (47) an der Kassette (20) zugewandten Kanten und/oder der ersten axialen Federwegsbegrenzung (11) und/oder der zweiten axialen Federwegsbegrenzung (12) zugewandten Außenflächen des wenigstens einen Stollens (43) angeordnet ist.

9. Elastisches Lagerelement (1) nach einem der Ansprüche 6 bis 8, **dadurch gekennzeichnet, dass** das wenigstens eine Einlegeelement (47) in den wenigstens einen Stollen (43) eingebettet ist.

10. Elastisches Lagerelement (1) nach einem der vorgehenden Ansprüche, **dadurch gekennzeichnet, dass** der Lagerkern (41) derart gestaltet ist, dass der Lagerkern (41) auch ohne aufvulkanisiertes Elastomer (42) in axialer Richtung gegenüber ersten axialen Federwegbegrenzungen (11) und/oder der zweiten axialen Federwegbegrenzungen (12) ein radiales Übermaß aufweist und zumindest bereichsweise einen Hinterschnitt in mindestens einer axialen Richtung aufweist.

11. Verfahren zur Montage eines elastischen Lagerelements (1) nach einem der vorherigen Ansprüche mit den folgenden Schritten:
a. Radiales Verspannen eines Federelements (40) durch Einbringen des Federelements (40) in eine Kassette (20) zum Herstellen einer Vormontagebaugruppe (2),
b. Einschieben der Kassette (20) der Vormontagebaugruppe (2) in eine Aufnahme (10) und damit axiales Verspannen des Federelements (40) zum Herstellen eines elastischen Lagerelements (1).

## Claims

1. Elastic bearing element (1) for supporting loads in a vehicle with a spring element (40), comprising:
- a bearing core (41),
- an elastomer (42) vulcanised onto the bearing core (41), wherein the elastomer (42) forms at least one stud (43) protruding from the bearing core (41),
a cassette (20) which is undersized relative to the spring element (40) and radially preloads the spring element (40), comprising:
- a side (21) facing the spring element,
- a side (22) facing away from the spring element,
and a receptacle (10) having an insertion opening for inserting the cassette (20), wherein the receptacle (10) has a first axial spring travel limiter (11) on a first end face and a second axial spring travel limiter (12) on a second end face, and the cassette (20) is received in the receptacle (10);
wherein the bearing element has a longitudinal axis (X).

2. Elastic bearing element (1) according to claim 1, **characterised in that** the first axial spring travel limiter (11) and the second axial spring travel limiter (12) axially preload the elastomer at least in some areas in the assembled state.

3. Elastic bearing element (1) according to one of the preceding claims, **characterised in that** the at least one stud (43) is interrupted by at least one recess (44) in at least one spatial direction.

4. Elastic bearing element (1) according to one of the preceding claims, **characterised in that** the bearing element (1) has a spring rate in the axial direction and at least two spring rates in the radial direction, and the spring rate in the axial direction is between 20% and 600%, preferably between 100% and 200% of the lower of those at least two spring rates in the radial direction.

5. Elastic bearing element (1) according to one of the preceding claims, **characterised in that** the at least one stud (43) of the spring element (40) is compressed by the cassette (20) by 10% to 50% of its radial extension, preferably 10% to 20%.

6. Elastic bearing element (1) according to one of the preceding claims, **characterised in that** at least one insert element (47) is arranged at contact points between the spring element (40) and the cassette (20) and/or between the spring element (40) and the receptacle (10).

7. Elastic bearing element (1) according to claim 6, **characterised in that** the at least one insert element (47) has at least one retaining element (48) and/or corresponds to at least one retaining element (48) of the elastic bearing element.

8. Elastic bearing element (1) according to one of claims 6 or 7, **characterised in that** the at least one insert element (47) is arranged on the edges facing the cassette (20) and/or the outer surfaces of the at least one stud (43) facing the first axial spring travel limiter (11) and/or the second axial spring travel limiter (12).

9. Elastic bearing element (1) according to one of claims 6 to 8, **characterised in that** the at least one insert element (47) is embedded in the at least one stud (43).

10. Elastic bearing element (1) according to one of the preceding claims, **characterised in that** the bearing core (41) is designed such that the bearing core (41) also has a radial excess in the axial direction relative to the first axial spring travel limiters (11) and/or the second axial spring travel limiters (12) even without a vulcanised elastomer (42) and has at least a partial undercut in at least one axial direction.

11. Method for assembling an elastic bearing element (1) according to one of the preceding claims, comprising the following steps:
a. radial clamping of a spring element (40) by inserting the spring element (40) into a cassette (20) to produce a pre-assembly (2),
b. inserting the cassette (20) of the pre-assembly (2) into a receptacle (10) and thereby axially clamping the spring element (40) to produce an elastic bearing element (1).

## Revendications

1. Élément de palier élastique (1) destiné à supporter des charges dans un véhicule, comprenant un élément à ressort (40) comportant:
- un noyau de palier (41),
- un élastomère (42) vulcanisé sur le noyau de palier (41), l'élastomère (42) formant au moins un crampon (43) qui dépasse du noyau de palier (41),
une cassette (20) qui présente une sous-dimension par rapport à l'élément à ressort (40) et qui précontraint radialement l'élément à ressort (40), comprenant:
- un côté (21) tourné vers l'élément élastique,
- un côté (22) opposé à l'élément élastique,
et un logement (10) comportant une ouverture d'insertion pour insérer la cassette (20), le logement (10) comportant une première limitation axiale de course élastique (11) vers un premier côté frontal et une deuxième limitation axiale de course élastique (12) vers un deuxième côté frontal, et la cassette (20) étant logée dans le logement (10);
l'élément de palier présentant un axe longitudinal (X).

2. Élément de palier élastique (1) selon la revendication 1, **caractérisé en ce que** la première limitation axiale de course élastique (11) et la deuxième limitation axiale de course élastique (12) précontraignent axialement l'élastomère au moins par zones à l'état monté.

3. Élément de palier élastique (1) selon l'une des revendications précédentes, **caractérisé en ce que** le au moins un crampon (43) est interrompu par au moins un évidement (44) dans au moins une direction spatiale.

4. Élément de palier élastique (1) selon l'une des revendications précédentes, **caractérisé en ce que** l'élément de palier (1) présente une raideur élastique dans la direction axiale et au moins deux raideurs élastiques dans la direction radiale, et la raideur élastique dans la direction axiale est comprise entre 20 % et 600 %, de préférence entre 100 % et 200 % de la plus faible de ces au moins deux raideurs élastiques dans la direction radiale.

5. Élément de palier élastique (1) selon l'une des revendications précédentes, **caractérisé en ce que** le au moins un crampon (43) de l'élément à ressort (40) est comprimé par la cassette (20) de 10 % à 50 % de son extension radiale, de préférence de 10 % à 20 %.

6. Élément de palier élastique (1) selon l'une des revendications précédentes, **caractérisé en ce qu'**au moins un élément d'insertion (47) est disposé aux points de contact entre l'élément à ressort (40) et la cassette (20) et/ou entre l'élément à ressort (40) et le logement 10.

7. Élément de palier élastique (1) selon la revendication 6, **caractérisé en ce que** le au moins un élément d'insertion (47) comporte au moins un élément de retenue (48) et/ou correspond à au moins un élément de retenue (48) de l'élément de palier élastique.

8. Élément de palier élastique (1) selon l'une des revendications 6 ou 7, **caractérisé en ce que** le au moins un élément d'insertion (47) est disposé sur les bords tournés vers la cassette (20) et/ou les surfaces extérieures du au moins un crampon (43) tournées vers la première limitation axiale de course élastique (11) et/ou la deuxième limitation axiale de course élastique (12).

9. Élément de palier élastique (1) selon l'une des revendications 6 à 8, **caractérisé en ce que** le au moins un élément d'insertion (47) est encastré dans le au moins un crampon (43).

10. Élément de palier élastique (1) selon l'une des revendications précédentes, **caractérisé en ce que** le noyau de palier (41) est conçu de telle sorte que le noyau de palier (41), même sans élastomère vulcanisé (42), présente un surdimensionnement radial dans la direction axiale par rapport aux premières limitations axiales de course élastique (11) et/ou les deuxièmes limitations axiales de course élastique (12) et présente au moins par endroits une contre-dépouille dans au moins une direction axiale.

11. Procédé de montage d'un élément de palier élastique (1) selon l'une des revendications précédentes, comprenant les étapes suivantes:
a. serrage radial d'un élément à ressort (40) par insertion de l'élément à ressort (40) dans une cassette (20) pour réaliser un ensemble de pré-montage (2),
b. insertion de la cassette (20) de l'ensemble de pré-montage (2) dans un logement (10) et serrage axial de l'élément à ressort (40) pour fabriquer un élément de palier élastique (1).
